# EUROPEAN PATENT APPLICATION

(11) **EP 4 470 994 A1**
(43) Date of publication of application: **04.12.2024**
(21) Application number: 23747089.3
(22) Date of filing: 27.01.2023
(51) Int. Cl.: C04B 35/83, B64G 1/40, C04B 35/52, D01F 9/145

(54) **C/C COMPOSITE AND ION ENGINE GRID**

(30) Priority: 28.01.2022 JP 2022012114
(71) Applicant: Toyo Tanso Co., Ltd., Osaka-shi Osaka 555-0011 (JP)
(72) Inventor: HIRAOKA, Toshiharu, Osaka-shi, Osaka 555-0011 (JP); TOMITA, Yuji, Osaka-shi, Osaka 555-0011 (JP); YAMAJI, Masatoshi, Osaka-shi, Osaka 555-0011 (JP)
(74) Representative: TBK
(86) International application number: PCT/JP2023/002648
(87) International publication number: WO 2023/145879

(57) **Abstract**

Provided is a C/C composite that reduces weight when used in an ion engine grid and makes it possible to achieve high levels of both erosion resistance and machinability. The present invention is a C/C composite for use in an ion engine grid, wherein the C/C composite is formed from a completely spread-type carbon fiber nonwoven fabric, and the carbon fibers constituting the carbon fiber nonwoven fabric are pitch carbon fibers.

## Description

### Technical Field

The present invention relates to a C/C composite for use in an ion engine grid of a space structure. The present invention also relates to an ion engine grid using the above C/C composite.

### Related Art

An ion engine may be used for orbital control or main propulsion of a space structure such as an asteroid probe (represented by Hayabusa of the Japan Aerospace Exploration Agency (JAXA)) or a geostationary satellite. In the ion engine, a gas as a propellant is ionized by microwaves or the like to generate plasma, from which ions are extracted using an accelerating electrode (grid), thereby performing acceleration. At this time, a thrust of several grams is generated due to reaction to an ion jet. Once in space, a space structure such as an artificial satellite no longer requires the thrust generated during launch, and instead requires a fuel-efficient engine such as an ion engine.

As an ion engine grid, a grid is used which is provided with a large number of through holes having a diameter of about 3 mm. As a material of the ion engine grid, for example, Patent Document 1 below describes that an accelerating electrode is made of molybdenum (Mo). Patent Document 2 below describes that a material having a small thermal expansion coefficient, such as a carbon-based material, may be used in some or all of multiple grid plates.

### Prior-Art Documents

### Patent Documents

Patent Document 1: Japanese Patent Laid-open No. H8-284803
Patent Document 2: Japanese Patent Laid-open No. 2005-36717

### SUMMARY OF THE INVENTION

### Problems to Be Solved by the Invention

In the case where a carbon-based material such as that described in Patent Document 2 is used as a material of an ion engine grid, the ion engine grid can be reduced in weight compared to Mo as in Patent Document 1. However, in the case where the carbon-based material is used as the material of the ion engine grid, the grid is subject to significant wear due to ion collisions, and erosion resistance may be insufficient. In the case where the ion engine grid is subjected to through hole drilling, edge chipping may occur at a bridge between the holes, a carbon fiber bundle may come off, or fuzzing may occur at an edge of a machined part, and machinability may be insufficient. In particular, in the case where the carbon-based material is used as the material of the ion engine grid, there is a problem that it is difficult to achieve high levels of both erosion resistance and machinability.

An object of the present invention is to provide a C/C composite and an ion engine grid using the C/C composite, in which the C/C composite reduces weight when used in an ion engine grid and makes it possible to achieve high levels of both erosion resistance and machinability.

### Means for Solving the Problems

A C/C composite according to the present invention is a C/C composite for use in an ion engine grid, characterized in that the C/C composite is composed of a carbon fiber nonwoven fabric of a completely spread type, and a carbon fiber constituting the carbon fiber nonwoven fabric is a pitch-based carbon fiber.

In the present invention, the C/C composite preferably has a bulk density of 1.60 Mg/m³ or more and 1.80 Mg/m³ or less.

In the present invention, a matrix component of the C/C composite preferably contains pyrolytic carbon.

In the present invention, a matrix component of the C/C composite preferably contains pitch-derived carbon.

In the present invention, a wear rate of the C/C composite when a surface of the C/C composite is irradiated with an ion beam by ion milling under conditions of a voltage of 6.0 kV and an irradiation time of 4 hours is preferably 24 µm/h or less.

An ion engine grid according to the present invention is characterized by being composed of the C/C composite of the present invention.

### Effects of the Invention

According to the present invention, a C/C composite and an ion engine grid using the C/C composite can be provided in which the C/C composite reduces weight when used in an ion engine grid and makes it possible to achieve high levels of both erosion resistance and machinability.

### BRIEF DESCRIPTION OF THE DRAWINGS

[FIG. 1] FIG. 1 shows a photograph of a carbon fiber nonwoven fabric used in Example 1.
[FIG. 2] FIG. 2 shows a photograph of a carbon fiber nonwoven fabric used in Comparative Example 1.
[FIG. 3] FIG. 3 is a photograph for confirming machinability of a C/C composite obtained in Example 1.
[FIG. 4] FIG. 4 is a photograph for confirming machinability of a C/C composite obtained in Example 2.
[FIG. 5] FIG. 5 is a photograph for confirming machinability of a C/C composite obtained in Comparative Example 1.
[FIG. 6] FIG. 6 is a photograph for confirming machinability of a C/C composite obtained in Comparative Example 2.
[FIG. 7] FIG. 7 is a photograph for confirming machinability of a C/C composite obtained in Comparative Example 5.

### DESCRIPTION OF THE EMBODIMENTS

The present invention will be described in detail below.

### (C/C Composite and Ion Engine Grid)

A C/C composite of the present invention is a carbon fiber-reinforced carbon composite material for use in an ion engine grid (electrode). The above C/C composite is composed of a carbon fiber nonwoven fabric of a completely spread type. A carbon fiber (hereinafter sometimes referred to as CF) constituting the above carbon fiber nonwoven fabric is a pitch-based carbon fiber.

When the C/C composite of the present invention is used as an ion engine grid, the weight can be reduced compared to the case where a metal such as Mo is used.

Since the carbon fiber constituting the carbon fiber nonwoven fabric is a pitch-based carbon fiber, the C/C composite of the present invention can improve the erosion resistance of an ion engine grid. The erosion resistance refers to the resistance of a grid to wear due to ion collisions of about 300 eV.

Since the C/C composite of the present invention is composed of a carbon fiber nonwoven fabric of a completely spread type, machinability when the C/C composite of the present invention is used in an ion engine grid can be improved. The carbon fiber nonwoven fabric of a completely spread type refers to a nonwoven fabric in which there is substantially no fiber bundle that can be confirmed by visual inspection or by observation under an optical microscope. A fiber bundle that can be confirmed by visual inspection or by observation under an optical microscope refers to, for example, a fiber bundle having a width of 1 mm or more. In particular, a fiber bundle that can be confirmed by visual inspection or by observation under an optical microscope refers to, for example, a fiber bundle having a width of 1 mm or more and a length of 10 mm or more. The expression "there is 'substantially' no fiber bundle that can be confirmed by visual inspection or by observation under an optical microscope" refers to that, for example, a proportion of fiber bundles that can be confirmed on a screen when observed with an optical microscope is 1% or less of the entire screen. It is not necessary that there is absolutely no fiber bundle that can be confirmed by visual inspection or by observation under an optical microscope. The carbon fiber nonwoven fabric of a completely spread type as described above is distinguished from a carbon fiber nonwoven fabric of an incompletely spread type in which the presence of fiber bundles can be confirmed.

In the present invention, the machinability refers to the machinability in drilling a through hole into the C/C composite. If the machinability is poor, edge chipping may occur at a bridge between the holes, a carbon fiber bundle may come off, or fuzzing may occur at an edge of a machined part.

In this way, the present inventors have discovered the following. When a C/C composite using a carbon fiber nonwoven fabric which is composed of a pitch-based carbon fiber and is of a completely spread type is used as an ion engine grid, high levels of both erosion resistance and machinability can be achieved while reducing the weight.

An ion engine grid of the present invention is composed of the above C/C composite. Since the ion engine grid of the present invention makes it possible to achieve high levels of both erosion resistance and machinability while reducing the weight, it can be suitably used in an ion engine mounted on a space structure such as an asteroid probe in particular.

In the present invention, the erosion resistance of the C/C composite can be evaluated by irradiating a surface of a sample with an ion beam and measuring a depth of an irradiation mark by ion milling.

Accordingly, the C/C composite of the present invention can also be used in an accelerating electrode or decelerating electrode of an ion milling device or an ion beam application device such as an ion beam sputtering device.

The C/C composite of the present invention, when irradiated with an ion beam by ion milling under conditions of a voltage of 6.0 kV and an irradiation time of 4 hours, has a wear rate of preferably 24 µm/h or less, more preferably 21 µm/h or less, and even more preferably 18 µm/h or less. In this case, the erosion resistance of the C/C composite can further be improved. In the present invention, the smaller the wear rate measured by ion milling, the more preferable it is. In reality, a lower limit of the wear rate measured by ion milling can be, for example, 17 µm/h.

As the ion beam milling device, for example, one manufactured by JEOL Ltd. under the model number "IB-19530CP" can be used. The test conditions include, for example, the following. A voltage at which an irradiation mark appears on the C/C composite is 6.0 kV, an irradiation time is 4 hours, and a portion of a 10 mm×7 mm surface of a sample (10 mm×7 mm×1 mmt) is irradiated with an ion beam. A depth of the irradiation mark can be measured using, for example, a microscope (manufactured by Keyence Corporation under the model number "Microscope VHX-7000"), and an average value measured in the X and Y directions can be used.

In the present invention, the erosion resistance may be evaluated according to an electrode wear rate in an electrical discharge machining (EDM) test.

The electrode wear rate of the C/C composite of the present invention as measured by the electrical discharge machining (EDM) test is preferably 500 µm/h or less, more preferably 450 µm/h or less, and even more preferably 400 µm/h or less. In this case, the erosion resistance of the C/C composite can further be improved. In the present invention, the smaller the electrode wear rate measured by the electrical discharge machining (EDM) test, the more preferable it is. In reality, a lower limit of the electrode wear rate can be, for example, 350 µm/h.

In the electrical discharge machining (EDM) test, for example, by measuring an electrode wear amount at the time of performing 2 mm machining on steel using an NC die-sinking electrical discharge machine (manufactured by Mitsubishi Electric Corporation under the model number "EA12V Advance") with a 20 mm×20 mm×4 mm sample as an electrode, the electrode wear rate can be determined.

In the present invention, the C/C composite has a bulk density of preferably 1.60 Mg/m³ or more, more preferably 1.70 Mg/m³ or more, and even more preferably 1.75 Mg/m³ or more. In this case, mechanical strength of the C/C composite can further be improved; when the C/C composite is used in an ion engine grid, deformation can be made less likely to occur. When the C/C composite is used in an ion engine grid, the erosion resistance or machinability can further be improved. An upper limit of the bulk density of the C/C composite is not particularly limited. In reality, the upper limit can be, for example, 1.80 Mg/m³.

The bulk density of the C/C composite can be determined by producing a 60 mm×10 mm×3 mmt bending test piece (TP) and measuring the dimensions and weight.

In the present invention, it is preferable that a matrix component of the C/C composite contains pyrolytic carbon or pitch-derived carbon (hereinafter sometimes referred to as pitch carbon), and it is more preferable that a matrix component of the C/C composite is pyrolytic carbon or pitch-derived carbon. In this case, the mechanical strength of the C/C composite can further be improved; when the C/C composite is used in an ion engine grid, deformation can be made less likely to occur. From the viewpoint of further improving the erosion resistance described above, it is preferable that the matrix component of the C/C composite contains pyrolytic carbon, and it is more preferable that the matrix component is pyrolytic carbon.

In the present invention, the C/C composite has a bending strength of preferably 100 MPa or more, more preferably 120 MPa or more, and even more preferably 140 MPa or more. In this case, when the C/C composite is used in an ion engine grid, deformation can be made less likely to occur. The higher the upper limit of the bending strength of the C/C composite, the more preferable it is. In reality, the upper limit can be, for example, 150 MPa.

In the present invention, the C/C composite has a bending elastic modulus of preferably 30 GPa or more, more preferably 35 GPa or more, and even more preferably 38 GPa or more. In this case, when the C/C composite is used in an ion engine grid, deformation can be made less likely to occur. The higher the upper limit of the bending elastic modulus of the C/C composite, the more preferable it is. In reality, the upper limit can be, for example, 40 GPa.

The bending strength and bending elastic modulus can be measured, for example, by producing a 60 mm×10 mm×3 mmt TP from the C/C composite and subjecting the TP to a three-point bending test. The three-point bending test can be carried out at a span of 40 mm using a universal material testing machine "5982" manufactured by Instron.

### (Production Method of C/C Composite)

The C/C composite of the present invention can be produced, for example, by the following method.

First, a carbon fiber nonwoven fabric is prepared. The carbon fiber nonwoven fabric may be of a completely spread type in which fibers are uniformly dispersed. The carbon fiber nonwoven fabric may be, for example, a paper-like nonwoven fabric. The carbon fiber nonwoven fabric may have a basis weight of, for example, 30 g/m² or more and 200 g/m² or less. The carbon fiber nonwoven fabric may have a thickness of, for example, 0.4 mm or more and 3.0 mm or less.

A carbon fiber constituting the carbon fiber nonwoven fabric is a pitch-based carbon fiber. The carbon fiber constituting the carbon fiber nonwoven fabric may have a length of, for example, 6 mm or more and 25 mm or less. The carbon fiber constituting the carbon fiber nonwoven fabric may have a fiber diameter of, for example, 7 µm **or** more and 11 µm or less.

The length or fiber diameter of the carbon fiber can be determined according to, for example, an average value of 10 carbon fibers measured using a scanning electron microscope (SEM).

Next, the prepared carbon fiber nonwoven fabric is impregnated with a thermosetting resin, thereby producing a prepreg. At this time, the thermosetting resin may be diluted with a solvent such as methanol for use. The prepreg is desirably prepared so as to have a resin solid content of 40% or more and 42% or less, and a volatile content of 5% or more and 8% or less. As the thermosetting resin, for example, phenolic resin, furan resin, or polycarbodiimide resin, can be used.

Next, a predetermined number of prepregs are laminated, and are heated while being pressurized by a hot platen press to obtain a molded body. The number of prepregs laminated can be adjusted according to, for example, a thickness of the prepreg and a thickness of a target. A pressure during pressurization can be, for example, 1.47 MPa or more and 2.94 MPa or less. A heating temperature can be, for example, 120 °C or higher and 160 °C or lower. A bulk density of the molded body can be, for example, 1.15 Mg/m³ or more and 1.35 Mg/m³ or less.

Next, the molded body is fired in an inert gas atmosphere, thereby obtaining a fired body. A firing temperature can be, for example, 800 °C or higher and 1000 °C or lower. As the inert gas, for example, nitrogen gas or Ar gas, can be used. A bulk density of the fired body can be, for example, 0.96 Mg/m³ or more and 1.13 Mg/m³ or less.

Next, the resulting fired body is subjected to densification processing, thereby obtaining the C/C composite. In the present invention, the densification processing does not have to be performed. However, from the viewpoint of further increasing the mechanical strength of the resulting C/C composite, it is desirable to perform the densification processing.

The densification processing can be performed, for example, by impregnating the fired body with pyrolytic carbon or pitch-derived carbon. By impregnating the fired body with pyrolytic carbon, a C/C composite can be obtained in which a matrix component contains pyrolytic carbon. By impregnating the fired body with pitch-derived carbon, a C/C composite can be obtained in which a matrix component contains pitch-derived carbon.

The pyrolytic carbon can be impregnated by, for example, chemical vapor infiltration (CVI) processing. As an impregnation method of pyrolytic carbon, for example, an isothermal method, a temperature gradient method, a pressure gradient method, or a pulse method for the purpose of shortening the time and achieving densification, can be used.

The impregnation method of pyrolytic carbon may be a conventionally known method as described in literatures such as "Introduction to Carbon Materials" (published by the Carbon Society of Japan in November 1972). In a general embodiment thereof, examples of a carbon generating material include one obtained by pyrolyzing a hydrocarbon gas or a hydrocarbon compound having 1 to 8 carbon atoms, in particular 3 carbon atoms, and allowing pyrolytic carbon to permeate and precipitate on a carbonaceous nonwoven fabric substrate. For concentration adjustment, a hydrocarbon concentration (H₂ gas is usually used as a dilution gas) can be preferably 3% to 30%, and more preferably 5% to 15%. It is desirable to operate under conditions of a total pressure of preferably 100 Torr (13.3 KPa) or less, and more preferably 50 Torr (6.6 KPa) or less.

An impregnation time of the pyrolytic carbon can be, for example, 400 hours or more and 1000 hours or less.

In the case of impregnation with pitch-derived carbon, pitch impregnation/firing may be repeated. The pitch impregnation/firing process can be repeated, for example, one or more times and not more than ten times.

In the present invention, in order to further improve crystallinity, the C/C composite may further be subjected to a heat treatment at high temperatures. In particular, in order to suppress the occurrence of warping due to a dimensional change, the C/C composite may be sandwiched between graphite plates and be subjected to the heat treatment at high temperatures in a vacuum furnace. A heat treatment temperature can be, for example, 2000 °C or higher and 2500 °C or lower.

The bulk density of the C/C composite obtained by such a production method can be, for example, 1.5 Mg/m³ or more and 1.8 Mg/m³ or less.

Next, the present invention will be clarified by giving specific examples of the present invention and comparative examples. The present invention is not limited to the following examples.

### (Example 1)

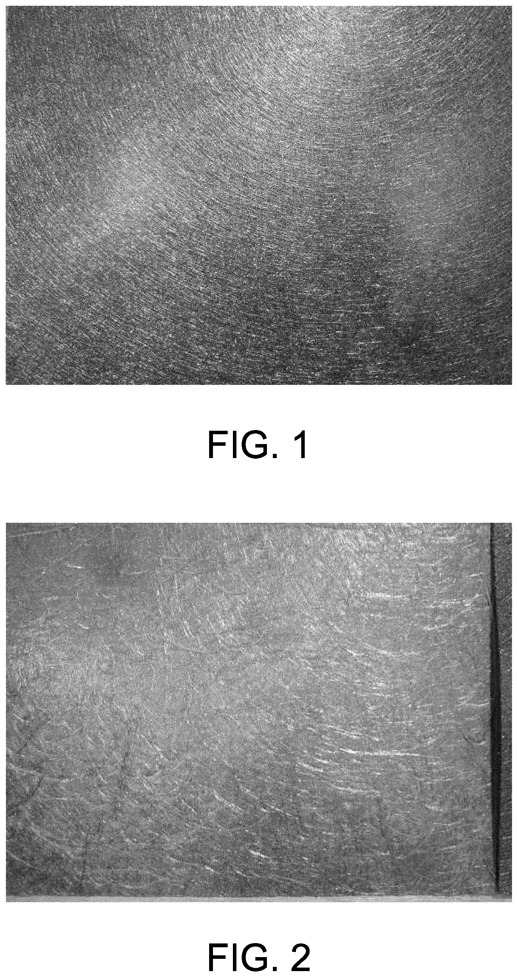

A completely spread paper-like carbon fiber nonwoven fabric (manufactured by Mitsubishi Chemical Corporation, DIALEAD K223SE-6 mm, basis weight: 80 g/m², thickness: 1.0 mm), composed of pitch-based carbon fiber, was impregnated with a phenolic resin diluted with methanol, and was then dried to obtain a prepreg having a resin solid content adjusted to 40% and a volatile content adjusted to 5%. It was confirmed from a photograph shown in FIG. 1 that the carbon fiber nonwoven fabric was of the completely spread type.

Next, 36 sheets of the resulting prepreg were laminated, were heated while being pressurized by a hot platen press (pressure: 2.94 MPa, temperature: 160 °C), and a molded body having a bulk density of 1.15 Mg/m³ to 1.35 Mg/m³ was produced. Next, the molded body was fired in an inert atmosphere (N₂ atmosphere) at 800 °C for 5 hours to obtain a fired body having a bulk density of 0.85 Mg/m³ to 0.95 Mg/m³.

Next, the resulting fired body was impregnated with pyrolytic carbon having high crystallinity by CVI processing until reaching a bulk density of 1.75 Mg/m³ or more. The impregnation with pyrolytic carbon was performed for 600 hours under CVI processing conditions including a temperature of 1100 °C, a total pressure of 20 Torr (2.7 kPa), C₃H₈ gas at 6 L/min, and H₂ gas at 70 L/min. Furthermore, in order to suppress warping, the fired body was sandwiched between graphite plates and subjected to a high temperature treatment at 2200 °C for 6 hours in a vacuum furnace, and a C/C composite was obtained.

### (Example 2)

A fired body produced in the same manner as in Example 1 was subjected to pitch impregnation/firing repeatedly. Specifically, the following processing was performed 10 times: the fired body was impregnated with pitch at 200 °C, and was held at 800 °C for 5 hours in an N₂ atmosphere for firing. Next, the fired body was sandwiched between graphite plates and subjected to a high temperature treatment at 2200 °C for 6 hours in a vacuum furnace, and a C/C composite was obtained.

### (Comparative Example 1)

A paper-like carbon fiber nonwoven fabric of an incompletely spread type (manufactured by Toray, TORAYCA T-700, basis weight: 200 g/m², thickness: 2.8 mm), composed of polyacrylonitrile (PAN)-based carbon fiber, was impregnated with a phenolic resin diluted with methanol, and was then dried to obtain a prepreg having a resin solid content adjusted to 42% and a volatile content adjusted to 5%. It was confirmed from a photograph shown in FIG. 2 that the nonwoven fabric was of the incompletely spread type.

Next, 16 sheets of the resulting prepreg were laminated, were heated while being pressurized by a hot platen press (pressure: 2.94 MPa, temperature: 160 °C), and a molded body having a bulk density of 1.32 Mg/m³ to 1.38 Mg/m³ was produced. Next, the molded body was fired in an inert atmosphere (N₂ atmosphere) at 800 °C for 5 hours to obtain a fired body having a bulk density of 0.85 Mg/m³ to 0.97 Mg/m³. Otherwise, in the same manner as in Example 1, a C/C composite was obtained.

### (Comparative Example 2)

A C/C composite was obtained in the same manner as in Example 2, except that a fired body obtained in the same manner as in Comparative Example 1 was used.

### (Comparative Example 3)

A paper-like carbon fiber nonwoven fabric of a completely spread type (manufactured by Mitsubishi Chemical Corporation, Pyrofil MR60H series, basis weight: 30 g/m², thickness: 0.4 mm), composed of PAN-based high-strength carbon fiber, was impregnated with a phenolic resin diluted with methanol, and was then dried to obtain a prepreg having a resin solid content adjusted to 40% and a volatile content adjusted to 5%. Next, 108 sheets of the resulting prepreg were laminated, were heated while being pressurized by a hot platen press (pressure: 2.94 MPa, temperature: 160 °C), and a molded body having a bulk density of 1.30 Mg/m³ to 1.37 Mg/m³ was produced. Next, the molded body was fired in an inert atmosphere (N₂ atmosphere) at 800 °C for 5 hours to obtain a fired body having a bulk density of 0.85 Mg/m³ to 0.95 Mg/m³. Otherwise, in the same manner as in Example 1, a C/C composite was obtained.

### (Comparative Example 4)

A C/C composite was obtained in the same manner as in Example 2, except that a fired body obtained in the same manner as in Comparative Example 3 was used.

### (Comparative Example 5)

A plain weave fabric (manufactured by Toray, TORAYCA T-700, basis weight: 400 g/m², thickness: 0.5 mm), composed of PAN-based high-strength carbon fiber, was impregnated with a phenolic resin diluted with methanol, and was then dried to obtain a prepreg having a resin solid content adjusted to 40% and a volatile content adjusted to 5%. Next, 10 sheets of the resulting prepreg were laminated, were heated while being pressurized by a hot platen press (pressure: 1.47 MPa, temperature: 160 °C), and a molded body having a bulk density of 1.45 Mg/m³ to 1.55 Mg/m³ was produced. Next, the molded body was fired in an inert atmosphere (N₂ atmosphere) at 800 °C for 5 hours to obtain a fired body having a bulk density of 1.30 Mg/m³ to 1.40 Mg/m³. Otherwise, in the same manner as in Example 2, a C/C composite was obtained.

### [Evaluation Methods]

### (Bulk Density)

A bulk density of the C/C composite was determined by producing a 60 mm×10 mm×3 mmt bending test piece (TP) and measuring the dimensions and weight.

### (Electrical Resistivity)

An electrical resistivity of the C/C composite was determined by producing a 60 mm×10 mm×3 mmt TP and measuring the electrical resistivity by a voltage drop method. Specifically, a current of 2.5 A was applied in a longitudinal direction of the TP, and a voltage drop across a span of 40 mm was measured.

### (Bending Strength and Bending Elastic Modulus)

A bending strength and a bending elastic modulus were measured by producing a 60 mm×10 mm×3 mmt TP from the C/C composite and subjecting the TP to a three-point bending test. The three-point bending test was carried out at a span of 40 mm using a universal material testing machine "5982" manufactured by Instron.

### The bending elastic modulus was evaluated according to the following evaluation criteria.

### [Evaluation Criteria]

A: having a bending elastic modulus of 35 GPa or more
B: having a bending elastic modulus of 30 GPa or more and less than 35 GPa
C: having a bending elastic modulus of less than 30 GPa

### (Erosion Resistance)

### EDM test:

In an electrical discharge machining (EDM) test, by measuring an electrode wear amount at the time of performing 2 mm machining on steel using an NC die-sinking electrical discharge machine (manufactured by Mitsubishi Electric Corporation under the model number "EA12V Advance") with a 20 mm×20 mm×4 mm sample as an electrode, an electrode wear rate (wear rate) was determined.

The erosion resistance (EDM test) was evaluated according to the following evaluation criteria.

### [Evaluation Criteria]

A: having an electrode wear rate (wear rate) of 400 µm/h or less
B: having an electrode wear rate (wear rate) of more than 400 µm/h

### Ion Milling Test:

As an ion beam milling device, one manufactured by JEOL Ltd. under the model number "IB-19530CP" was used. The test conditions included a voltage of 6.0 kV and an irradiation time of 4 hours, and a portion of a 10 mm×7 mm surface of a sample (10 mm×7 mm×1 mmt) was irradiated with an ion beam. A depth of an irradiation mark was measured using a microscope (manufactured by Keyence Corporation under the model number "Microscope VHX-7000"). An average value of two measured values in the X and Y directions was used.

The erosion resistance (ion milling test) was evaluated according to the following evaluation criteria.

### [Evaluation Criteria]

A: having a wear rate of 18 µm/h or less
B: having a wear rate of more than 18 µm/h and 24 µm/h or less
C: having a wear rate of more than 24 µm/h

### (Machinability)

The machinability was confirmed as follows. The C/C composite was machined into a flat plate having a thickness of 1 mm. The resulting flat plate was further machined to have 504 (=24 rows×21 steps) through holes having a diameter of 3 mm and arranged at an X-direction pitch of 3 mm and a Y-direction pitch of 1.75 mm. By observation using a microscope (manufactured by Keyence Corporation under the model number "Microscope VHX-7000"), it was confirmed whether edge chipping had occurred at a bridge between the holes or whether fuzzing had occurred.

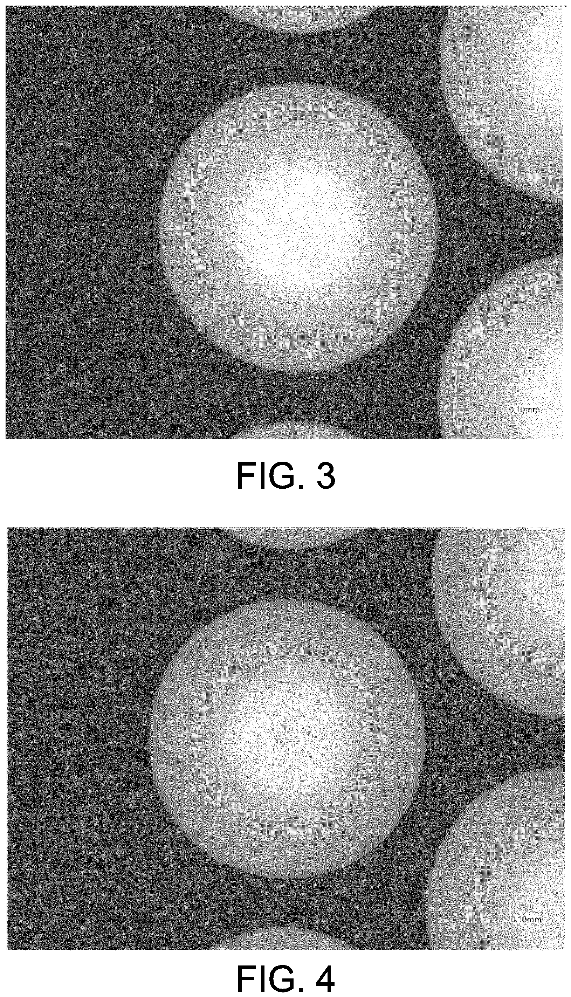

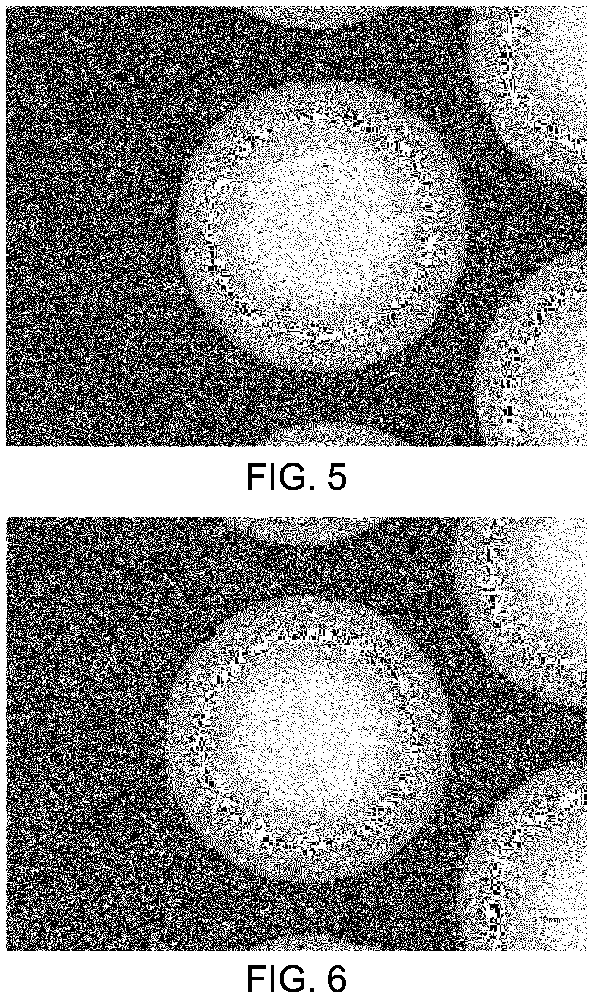

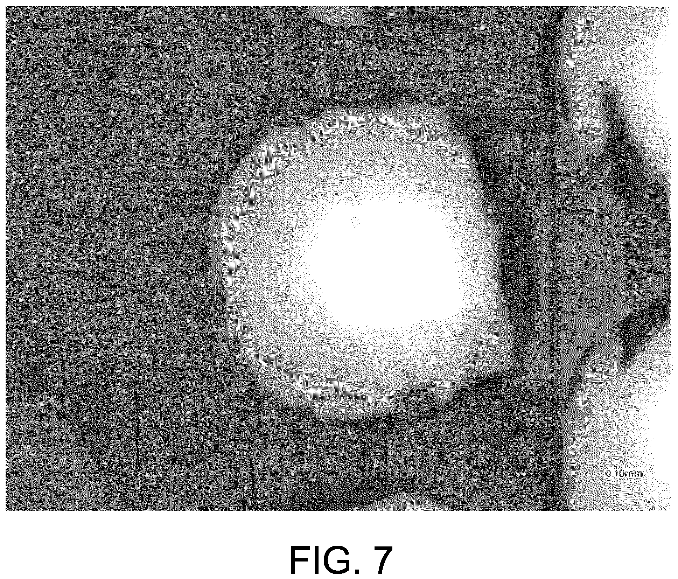

FIG. 3 to FIG. 7 are respectively photographs for confirming the machinability of the C/C composites obtained in Examples 1 and 2 and Comparative Examples 1, 2, and 5. FIG. 3 shows Example 1, and FIG. 4 shows Example 2. FIG. 5 shows Comparative Example 1, FIG. 6 shows Comparative Example 2, and FIG. 7 shows Comparative Example 5.

The machinability was evaluated according to the following evaluation criteria.

### [Evaluation Criteria]

A: there was no fuzzing, no coming-off of carbon fiber, and no edge chipping
B: there was fuzzing; there was no coming-off of carbon fiber and no edge chipping
C: there were fuzzing and coming-off of carbon fiber; there was no edge chipping
D: there were fuzzing, coming-off of carbon fiber, and edge chipping

The results are shown in Tables 1 and 2 below.

**[Table 1]**

| | CF type | Form | Fiber spread | Matrix | Bulk density (Mg/m³) | Electrical resistivity (µΩ·m) | Bending strength (MPa) | Bending elastic modulus (GPa) | Evaluation of bending elastic modulus |
|---|---|---|---|---|---|---|---|---|---|
| Example 1 | Pitch-based CF | CF paper | Complete | Pyrolytic carbon | 1.72 | 13.1 | 143 | 38 | A |
| Example 2 | Pitch-based CF | CF paper | Complete | Pitch carbon | 1.71 | 149 | 117 | 37 | A |
| Comparative Example 1 | PAN-based CF | CF paper | Incomplete | Pyrolytic carbon | 1.54 | 23.3 | 158 | 28 | C |
| Comparative Example 2 | PAN-based CF | CF paper | Incomplete | Pitch carbon | 1.63 | 181 | 162 | 32 | B |
| Comparative Example 3 | PAN-based CF | CF paper | Complete | Pyrolytic carbon | 1.50 | 19.1 | 129 | 22 | C |
| Comparative Example 4 | PAN-based CF | CF paper | Complete | Pitch carbon | 1.60 | 18.0 | 110 | 23 | C |
| Comparative Example 5 | PAN-based CF | Plain weave fabric | - | Pitch carbon | 1.66 | 190 | 183 | 55 | A |

**[Table 2]**

| | EDM test (2 mm machining on steel) | | | | Ion milling test (6.0 kV, 4 h) | | | | | Evaluation of machinability |
|---|---|---|---|---|---|---|---|---|---|---|
| | Electrode wear amount (µm) | Machining time (min) | Wear rate (µm/h) | Evaluation | Vertical depth (µm) | Horizontal depth (µm) | Average depth (µm) | Wear rate (µm/h) | Evaluation | |
| Example 1 | 287 | 48 | 359 | A | 69 | 67 | 68 | 17 | A | A |
| Example 2 | 316 | 49 | 387 | A | 75 | 91 | 83 | 21 | B | A |
| Comparative Example 1 | 926 | 66 | 846 | B | 95 | 105 | 100 | 25 | C | C |
| Comparative Example 2 | 807 | 65 | 742 | B | 91 | 121 | 106 | 26 | C | C |
| Comparative Example 3 | 589 | 56 | 627 | B | 96 | 98 | 97 | 24 | B | A |
| Comparative Example 4 | 617 | 52 | 709 | B | 95 | 98 | 97 | 24 | B | A |
| Comparative Example 5 | 953 | 69 | 833 | B | 99 | 141 | 120 | 30 | C | D |

From Tables 1 and 2, it can be confirmed that, the C/C composites of Examples 1 and 2, which used a carbon fiber nonwoven fabric of the completely spread type composed of pitch-based carbon fiber, were excellent in terms of all of mechanical strength, erosion resistance, and machinability. On the other hand, Comparative Example 1 was insufficient in terms of mechanical strength, erosion resistance, and machinability; Comparative Examples 2 and 5 were insufficient in terms of erosion resistance and machinability; Comparative Examples 3 and 4 were insufficient in terms of mechanical strength and erosion resistance (EDM test in particular).

## Claims

1. A C/C composite for use in an ion engine grid, wherein
the C/C composite is composed of a carbon fiber nonwoven fabric of a completely spread type; and
a carbon fiber constituting the carbon fiber nonwoven fabric is a pitch-based carbon fiber.

2. The C/C composite according to claim 1, wherein
the C/C composite has a bulk density of 1.60 Mg/m³ or more and 1.80 Mg/m³ or less.

3. The C/C composite according to claim 1 or 2, wherein
a matrix component of the C/C composite contains pyrolytic carbon.

4. The C/C composite according to claim 1 or 2, wherein
a matrix component of the C/C composite contains pitch-derived carbon.

5. The C/C composite according to any one of claims 1 to 4, wherein
a wear rate of the C/C composite when a surface of the C/C composite is irradiated with an ion beam by ion milling under conditions of a voltage of 6.0 kV and an irradiation time of 4 hours is 24 µm/h or less.

6. An ion engine grid, comprising the C/C composite according to any one of claims 1 to 5.
